# EUROPEAN PATENT SPECIFICATION

(11) **EP 2 340 483 B1**
(45) Date of publication and mention of the grant of the patent: **28.11.2018**
(21) Application number: 09812110.6
(22) Date of filing: 01.09.2009
(51) Int. Cl.: G06F 21/57, G06F 9/44

(54) **METHOD FOR PROVISIONING TRUSTED SOFTWARE TO AN ELECTRONIC DEVICE**
VERFAHREN ZUR BEREITSTELLUNG VON SICHERER SOFTWARE FÜR EIN ELEKTRONISCHES GERÄT
PROCÉDÉ D'APPROVISIONNEMENT D'UN LOGICIEL DE CONFIANCE À UN DISPOSITIF ÉLECTRONIQUE

(30) Priority: 02.09.2008 US 202822
(43) Date of publication of application: 06.07.2011
(73) Proprietor: OneSpan International GmbH, 8152 Glattbrugg (CH)
(72) Inventor: BRAAMS, Harm, Nieuwegein (NL)
(74) Representative: Beck, Michaël Andries T.
(86) International application number: PCT/US2009/055602
(87) International publication number: WO 2010/027970

(56) References cited:
- EP-A1- 1 633 094
- WO-A1-2004/075505
- WO-A2-2007/014314
- US-A1- 2004 064 741
- US-A1- 2005 154 879
- US-A1- 2008 133 929
- US-A1- 2008 133 929
- US-B1- 6 775 771

## Description

### Technical field

The present invention relates to the field of software distribution, more specifically to establishing trust in the origin and authenticity of software updates sent to an electronic device via a general-purpose computer.

### Background art

The process of distributing software updates for personal computers has evolved from a physical delivery model, in which new versions of software were delivered to customers on a physical data storage medium such as a magnetic or optical disk, to a network based model, in which the new versions could be downloaded from a network resource. In the network-based model, the initiative to take up an update can either lie with the customer or with the software provider. Donohue [US 6199204 B (DONOHUE, SEAMUS) 2001-03-06] discloses a network-based software updating mechanism, in which the customer runs an updater agent that checks for the availability of relevant software updates, and installs them as needed. WO 2007/014314 describes further methods for secure software updates.

As customers can no longer physically verify the identity of the software update provider, the network-based model has made the problem of establishing trust in the origin and authenticity of the downloaded software more prominent. This problem can be addressed by means of cryptographic methods. More particularly, public key cryptography can be used to digitally sign software releases with the private key of the software provider, allowing the customer to verify the origin and authenticity of the release using the software provider's readily available public key.

Public key cryptography can also be used for verifying the origin and authenticity of electronically distributed software for electronic devices other than personal computers. This concerns the device's firmware as well as any applications that may be added or updated once the device is under the care of the end user. For example, Wysocki et al. [US 20070028120 A (WYSOCKI, CHRISTOPHER R.)] disclose a method for upgrading software on a portable electronic device, comprising *inter alia* the acts of receiving an encrypted software module at the portable electronic device, decrypting the encrypted software module at the electronic device, authenticating the decrypted software module, and installing the software module on the portable electronic device after said decrypting and said authenticating have successfully completed. The cited application further describes that the authentication can take place by verifying a digital signature.

The present invention aims at providing an improved method to provision software updates to an electronic device, specifically a device that is expected to operate in a secure way and that is under the control of an end user.

### Disclosure of the invention

### Technical problem

Verification of the origin and authenticity of software modules is best addressed by verifying a cryptographic signature over the program code in the software module (or over a hash value computed from that program code), preferably a signature generated using public-key cryptography. Such signature must be generated with the software provider's private key, and can be verified with the software provider's corresponding public key, which should be provided and certified to the electronic device, or pre-loaded in the electronic device. Certification of a public key is achieved by providing, along with the signed data, a set of certificates, each of which contains a signed statement that a certain public key belongs to the stated signer. The set of certificates must form an unbroken chain, such that the authenticity of the key actually used to sign the software module can be traced back in one or more steps to an ultimate certification authority, whose public key is pre-loaded in the electronic device. Several technical problems arise when this security paradigm is to be applied in a simple electronic device.

Cryptographic material such as keys, signatures, and certificates are digitally exchanged as strings of bits representing data containers, the structure and encoding of which must be understood by both sender and receiver of the material. Several appropriate data structures have therefore been developed and standardized for these exchanges, notably in RSA Laboratories' PKCS #7 standard [RSA Laboratories. PKCS #7: Cryptographic Message Syntax Standard. 1.5 edition. Redwood City: RSA Laboratories, 1993.]. An XML-based alternative specification can be found in the XML Signature Syntax and Processing recommendation [World-Wide Web Consortium. XML Signature Syntax and Processing. 2nd edition. Edited by EASTLAKE, Donald, et al. W3C, 2008.].

To facilitate standardization and implementation, standardized data structures such as those figuring in PKCS #7 are described in a formal language. The most widely-used formal language for this purpose is Abstract Syntax Notation One (ASN.1), which was developed and standardized by CCITT in Recommendation X.208 and its successor ITU-T Recommendation X.680 [ ITU-T. X.680 - Information technology - Abstract Syntax Notation One (ASN.1): Specification of basic notation. 07/2002 edition. Geneva: International Telecommunication Union, 2003.]. If the ASN.1 description of a data structure determines which elements must or may be present and to which type they shall belong, it does not impose a particular binary representation for this data. It is nevertheless crucial that sender and receiver of the data agree on this representation as well. Several encoding standards address the issue of harmonizing binary representations, the most relevant of which are known as the Basic Encoding Rules (BER), Canonical Encoding Rules (CER), and the Distinguished Encoding Rules (DER), based on CCITT Recommendation X.209 and its successor ITU-T Recommendation X.690 [ ITU-T. X.690 - Information technology - ASN.1 Encoding Rules: Specification of Basic Encoding Rules (BER), Canonical Encoding Rules (CER) and Distinguished Encoding Rules (DER). 07/2002 edition. Geneva: International Telecommunication Union, 2003.]. DER provides an unambiguous binary representation of data, including for every object information about its data type and its length in octets; individual variables are therefore said to be encoded in tag-length-value (TLV) entities.

In order to be robust against errors, which may originate at the data source or during transmission, any process dealing with objects encoded in complex data structures, such as the software upgrade process targeted by the present invention, should verify whether the received data complies with the expected standardized structure, and whether the TLV entities are internally consistent. Such a verification may require a significant amount of memory and processing, depending on the complexity of the data structures, which could exceed the capabilities of certain low-cost electronic devices that nevertheless have the need for secure download of data. It is therefore a first object of this invention to improve the efficiency of the verification process.

Certificates are generally issued with an explicit expiry date. As private keys occasionally do get compromised, keys and certificates may be also subject to revocation before their expiry. Revocations can be notified to prospective users of the public key by means of certificate revocation lists (CRLs), which are often made available via the internet, and which should be consulted prior to each use of a certificate pertaining to a third-party public key. Alternatively, the status of a particular certificate can be looked up on-line via the On-Line Certificate Status Protocol (OCSP). It is therefore a further object of the present invention to provide a way to take expiry date and revocation information into account in the targeted secure software upgrade process.

The method of Wysocki et al. is adequate for high-end portable electronic devices, such as portable media players and mobile phones, which have sufficient processing power to carry out all necessary manipulations on the received software modules, including performing all necessary verifications on the validity and the consistency of the contents of the software module.

It is desirable to have an equally secure software upgrade method for electronic devices that have limited processing power, no internal clock, or no internet connectivity, due to the economic constraints on their production cost. One targeted class of low-cost electronic devices is comprised of authentication devices, more specifically secure smart card readers, which are commonly used for authenticating customers on e-commerce and e-banking websites. In the turbulent world of smart cards, new functionality is always invented. It is hard for a smart card reader to guarantee unlimited support for unknown future smart cards. Upgradeability is therefore a key feature for secure smart card readers, such that application functions can be added in that secure reader. This upgradability must maintain the trustworthiness of the reader and the process should not put a heavy load on the (limited) memory in the reader. It is furthermore desirable that the secure software upgrade method provides support for validating multi-stage certificate chains, rather than signatures only.

### Technical solution

The present invention is based on the insight that the operations required to verify the origin and the authenticity of a software module for an electronic device can advantageously be divided between a general-purpose computer, hereinafter the host, having the electronic device attached to it, and the electronic device itself. More specifically, memory and processing intensive tasks such as syntax checking are done at the host, while security-critical tasks such as cryptographic verifications are done at the electronic device to the extent that the latter is capable of doing so. Although it is preferential that all security related tasks be performed by the electronic device, the invention offers the possibility to have the host perform certain security tasks. A first set of security tasks that are advantageously performed at the host, comprises those tasks that exceed the capabilities of the electronic device. While suboptimal from a security point of view, this approach is still preferred over not performing those security tasks at all. A second set of security tasks that are advantageously performed at the host, comprises tasks that would normally also be performed at the electronic device, but which are pre-emptively run at the host as a way to avoid transferring to the electronic device a software module of which it can be known in advance that it will be rejected by the electronic device. This may be of particular interest in cases where the electronic device may end-up in a degraded or "bricked" state if an inappropriate payload is allowed to be downloaded. Such may be the case in very resource-limited devices where a scarcity of data storage space necessitates overwriting the existing firmware with the new firmware, whereby the new firmware is only activated upon successful completion of the security checks. If the latter are unsuccessful, the new firmware is not activated but the old firmware is no longer available either.

Accordingly, the method of the present invention for updating software on an electronic device comprises two sets of verifications: one on the host, and one on the electronic device.

The host is used to obtain and store a software module for an electronic device, including a payload (which may comprise the actual program code, a firmware image, a command to be executed by the electronic device, configuration parameters, elements for authentication, or any other body of data that may have an impact on the trust level of the electronic device), the signature over the payload, and optionally a set of certificates pertaining to the authenticity of the keys used to generate and verify the signature over the payload. The software module is preferably structured according to a standardized format. The set of certificates may contain one or more certificates; if only one certificate is present, it should certify the key used for the signature over the payload, and be signed by the certification authority whose public key is pre-loaded in the electronic device. If no certificates are provided, the signature over the software module should be generated by the entity whose public key is pre-loaded in the electronic device. The pre-loading of a public key in the electronic device may take place prior to distribution of the electronic device to the end user, and the key may later be replaced *inter alia* by a special "management application", which may be downloaded according to the method of the present invention. The management application retrieves the new public key from the host or from within its application code itself, and it performs any appropriate security, environment, or other checks and/or user interactions prior to storing the new public key in the electronic device. The host could be a desktop personal computer, laptop, handheld computer, or similar. It may have a network connection to obtain the software module from a network resource, or alternatively it may retrieve the software module from a removable storage medium.

The host shall have enough memory and processing power to not only initiate and guard the software module obtaining process, but to also take care of the interpretation of the software module; i.e., it performs a structural verification consisting *inter alia* of an interpretation and validation of the ASN.1-defined structures. If the verification by the host is successful, the actual payload data (e.g., the program code for the electronic device, or an intermediate verification key) can be downloaded to the electronic device, optionally after requesting an approval of the end user of the electronic device.

The electronic device will in turn retrieve the components from the data structure received from the host, and perform the signature verification and certificate verification (if any) in its secure environment. In addition to assessing the cryptographic correctness of the (chain of) certificates, the electronic device may also assess whether the entity providing the software module, whose identity has been certified, is in fact entitled to provide software modules for the electronic device in question. The cryptographic verification process must be performed in the electronic device, in order not to compromise the integrity of the (chain of) certificates and data. However, the structural verifications performed by the host, which may be memory and/or processing intensive, need not be replicated by the electronic device.

Upon successful verification in the electronic device, the payload program can be installed, and the end user can be informed through a message displayed on the host and/or the electronic device. Displaying a message at the electronic device is understood to include any form of communicating information to a user, such as by textual or graphical display, synthesized speech, beeping sounds, or similar. Displaying a message at the host is understood to include any form of communicating information to a computer user or to the operating system environment in which the program is executed, such as by textual or graphical display on a monitor, synthesized speech, beeping sounds, a program exit code, or similar.

Apart from parsing and verifying the properties of the data structure, other steps may advantageously be performed at the host. One such step is verifying whether the certificates included in the software module, if any, are valid, i.e. whether they comply with the expected format (e.g. X.509v3, RFC5280, RFC2528, or other formats known to the person skilled in the art) and/or whether they contain a cryptographically sound signature from the certification authority over the statements and/or public key contained in the certificate. Another such step is repackaging the content of the software module in order to present them to the electronic device in a more manageable form, e.g., by rearranging the order of the items, by imposing a certain maximum size on each item to be transmitted, or by removing redundant information from the data structure. Yet another such step is checking whether the certificates supplied in the software module are subject to a revocation, by completing an On-line Certificate Status Protocol (OCSP) query or checking a certificate revocation list; this is of particular relevance when the host has access to external resources via a network such as the internet, which may not be the case for the electronic device itself. One more such step is checking whether the certificates supplied in the software modules are being used within the date range that limits their validity; this is of particular relevance when the electronic device does not have a system clock which keeps track of the current date in an accurate and trusted way.

The host may also advantageously verify the signature provided in the software module. To perform a cryptographic validation, the host must have access to the public key corresponding to the key used to generate the signature. The public key may be found in one of the certificates, if certificates are present in the software module, or alternatively it may be obtained from a different source, such as a network resource. In the latter case, the host should use the same public key as the one pre-stored in the electronic device. It may be known to the host which public key is pre-stored in the electronic device, or alternatively the host may query the electronic device to learn which public key is pre-loaded. The response from the electronic device to this query may consist of the public key itself, a hash or fingerprint computed from this public key, or any other indication that unambiguously identifies the entity that wields the ultimate authority over the software on the electronic device (e.g., the manufacturer, the provider or the owner of the electronic device).

The host may perform other useful checks, such as verifying whether the algorithms used to generate the cryptographic material in the software module are among those that are supported by the electronic device, and verifying payload characteristics such as, in the case of program code, whether it corresponds to a program with correct title, version number, size or other characteristics.

The present invention thus provides a method for updating software on an electronic device in a trusted way, wherein verification steps are divided between a host system connected to the electronic device, and the electronic device itself. The present invention thus further provides a storage medium containing a program for a host system, causing this host system to perform verification steps with respect to a software update for an attached electronic device, and to appropriately interact with said electronic device.

### Advantageous effects

The present invention allows simple electronic devices to reach an increased level of trust in software modules used to upgrade the firmware, data, or functionality, by cooperating with a host system that has access to additional resources, effectively dividing the steps required to verify such software modules between a host and the target electronic device. As the resources of the host - including memory, processing power, network access, and system clock - exceed those of the target electronic device, checks which could not previously be conducted inside the target electronic device may now be performed at the host prior to forwarding the software module to the target electronic device. Thus, the risk of installing rogue upgrades in the target electronic device is reduced significantly.

### Brief description of the drawings

The foregoing and other features and advantages of the invention will be apparent from the following, more particular description of several embodiments of the invention, as illustrated in the accompanying drawings.

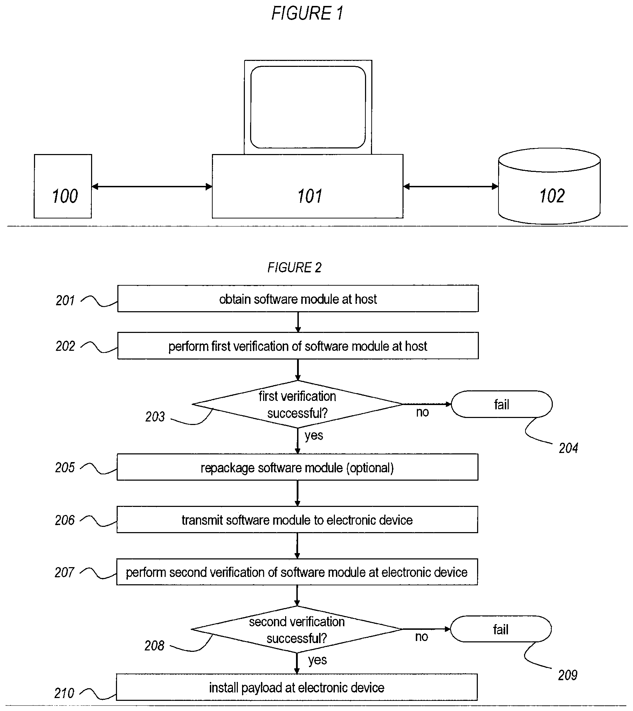

Figure 1 shows the electronic device **100,** coupled to a host **101,** which has access to a resource **102** storing a software module.
Figure 2 presents a flow chart illustrating the method of the present invention, indicating at each step whether the action is carried out at the host or at the electronic device.

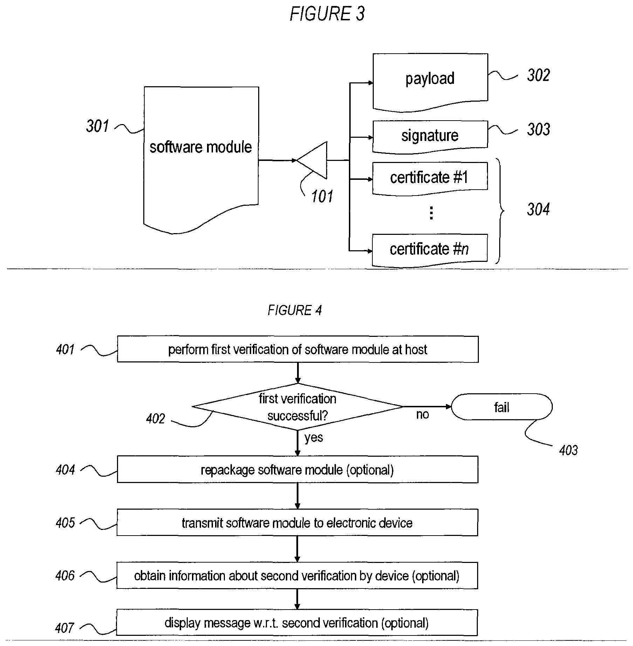

Figure 3 illustrates schematically how the data structure comprised in the software module **301** is interpreted to access the various components **302-304** at the host **101** (shown by a symbol for its function of extracting data).
Figure 4 presents a flow chart illustrating a program as stored on a computer-readable storage medium according to the present invention.

### Mode(s) for carrying out the invention

In a preferred embodiment, the method is carried out by a personal computer embodying the host **101,** and a secure smart card reader embodying the electronic device **100.** Preferably, the secure smart card reader is connected to the personal computer by means of a USB connection **103.** The method comprises using the personal computer to download **201** from a server **102** a software module **301** comprising a payload **302** containing a new or updated application or firmware for the secure smart card reader, a signature **303,** and optionally a set of certificates **304.** The method further comprises verifying **202,** at the personal computer **101,** said software module **301,** according to the content hierarchy of the software module, which is preferably a PKCS #7 compliant message encoded in DER TLV entities. If the verification is successful **203,** the personal computer **101** optionally repackages **205** and transmits **206** the software module **301** (or its repackaged extracted components **302-304)** to the secure smart card reader **100.** In a second verification **207,** the secure smart card reader **100** verifies the signature **303** over the payload **302** and optionally each of the keys in the certificate chain **304** leading up to a pre-stored root public key. Upon successful verification **208,** the payload **302** is installed **210.**

More generally, the method of the present invention comprises obtaining **201** a software module **301** at a host **101,** said software module **301** comprising a payload **302** and a signature **303;** verifying **202** at said host **101** said software module **301;** upon successful verification **203,** transmitting **206** said software module **301** from said host **101** to an electronic device **100;** verifying **207** at said electronic device **100** said signature **303;** acting **210** at said electronic device **100** upon said payload **302** if said second verifying is successful **208.** If said first verifying is unsuccessful **203,** the procedure fails **204.** If said second verifying is unsuccessful **208,** the procedure fails **209.**

In one embodiment of the present invention, said first verification comprises checking the correctness of the internal structure of said software module. In more particular embodiments, said internal structure is checked against a set of syntax rules standardized in an ASN.1 definition, or more specifically against a PKCS#7 message syntax. In other more particular embodiments, said internal structure is checked against the syntax of the XML Signature recommendation. In further particular embodiments, said internal structure is checked against encoding rules, or more specifically against the Basic Encoding Rules or the Distinguished Encoding Rules.

In one embodiment of the present invention, said first verification comprises checking the validity of said signature. In a more particular embodiment, the method according to the present invention further comprises obtaining at said host an indication from said electronic device of a public key preloaded in said electronic device.

In one set of embodiments of the present invention, said software module further comprises a set of certificates pertaining to a key used to generate said signature, and said second verification further comprises validating said set of certificates. In one such embodiment, said first verification comprises checking the validity of at least one of said set of certificates, in particular by checking whether the statements made about the public key are correctly signed by the certification authority. In another such embodiment, said first verification comprises checking the format of the certificate. In yet another such embodiment, said first verification comprises accessing a certificate revocation list with respect to at least one of said set of certificates. In still another such embodiment, said first verification comprises completing an OCSP query with respect to at least one of said set of certificates. In a further embodiment, said first verification comprises checking for at least one of said set of certificates whether the current date lies within the validity interval for said at least one certificate.

Some embodiments of the present invention further comprise repackaging said software module into one or more components at said host. When multiple components result from said repackaging, these may be transmitted to the electronic device in a predetermined order, or at the request of said electronic device.

In one embodiment of the present invention, said transmitting takes place via a wired network. More particularly, the wired network may comprise a universal serial bus link. In another embodiment of the present invention, said transmitting takes place via a wireless network. More particularly, the wireless network may comprise a Bluetooth link.

In a set of embodiments of the present invention, said electronic device is a smart card reader.

In one embodiment of the present invention, said second verification comprises establishing whether a first one of said set of certificates is signed with a private key whose corresponding public key is pre-installed in said electronic device. In a particular embodiment, said payload is a firmware image that replaces said pre-installed public key with a different public key.

In one embodiment of the present invention, said method further comprises displaying a confirmation message and capturing a user approval indication at said electronic device prior to said installing.

In one set of embodiments of the present invention, said acting upon said payload comprises installing program code. In another embodiment of the present invention, said acting upon said payload comprises activating a firmware image. In yet another embodiment of the present invention, said acting upon said payload comprises executing a command. In still another embodiment of the present invention, said acting upon said payload comprises storing a public key in said electronic device.

In a general embodiment of the computer-readable storage medium according to the present invention, the medium contains a program for a computer, which when executed causes the computer to verify **401** a software module accessible to said computer, said software module comprising at least a payload, a signature pertaining to said payload, and a set of certificates pertaining to a key used to generate said signature; and upon successful verification **402** transmit **405** said software module to an electronic device. No further steps are required if said first verification **402** is unsuccessful **403.**

In one set of embodiments of the medium, said program further causes said computer to obtain **406** information indicative of a second verification by said electronic device pertaining to said signature and said set of certificates; and display **407** a message indicative of said verification.

In one embodiment of the present invention, said first verification comprises checking the correctness of the internal structure of said software module. In more particular embodiments, said internal structure is checked against a set of syntax rules standardized in an ASN.1 definition, or more specifically against a PKCS#7 message syntax. In other more particular embodiments, said internal structure is checked against the syntax of the XML Signature recommendation. In further particular embodiments, said internal structure is checked against encoding rules, or more specifically against the Basic Encoding Rules or the Distinguished Encoding Rules.

In one embodiment of the computer-readable storage medium, said first verification comprises checking the validity of said signature. In a more particular embodiment, the program contained on the medium further causes the computer to obtain an indication from said electronic device of a public key preloaded in said electronic device.

In one set of embodiments of the computer-readable storage medium, said software module further comprises a set of certificates pertaining to a key used to generate said signature. In one such embodiment, said first verification comprises checking the validity of at least one of said set of certificates, in particular by checking whether the statements made about the public key are correctly signed by the certification authority. In another such embodiment, said first verification comprises checking the format of the certificate. In yet another such embodiment, said first verification comprises accessing a certificate revocation list with respect to at least one of said set of certificates. In still another such embodiment, said first verification comprises completing an OCSP query with respect to at least one of said set of certificates. In a further embodiment, said first verification comprises checking for at least one of said set of certificates whether the current date lies within the validity interval for said at least one certificate.

Some embodiments of the computer-readable storage medium further comprise repackaging said software module into one or more components at said host. When multiple components result from said repackaging, these may be transmitted to the electronic device in a predetermined order, or at the request of said electronic device.

In one embodiment of the medium, said transmitting takes place via a wired network. More particularly, the wired network may comprise a universal serial bus link. In another embodiment of the present invention, said transmitting takes place via a wireless network. More particularly, the wireless network may comprise a Bluetooth link.

In a set of embodiments of the medium, said electronic device is a smart card reader.

While various embodiments of the present invention have been described above, it should be understood that they have been presented by way of example only, and not limitation. Thus, the breadth and scope of the present invention should not be limited by any of the above described exemplary embodiments but should be defined only in accordance with the following claims and their equivalents.

## Claims

1. A method for updating software on an electronic device, comprising:
obtaining (201) a software module (301) at a host (101), said software module (301) comprising at least a payload (302), and a signature (303) pertaining to said payload (302);
performing at said host (101) a first verification (202, 401) of said software module (301);
transmitting (206, 405) said software module (301) from said host (101) to said electronic device (100) if said first verification (202, 401) is successful (203);
performing at said electronic device (100) a second verification (207) of said software module (301), said second verification (207) comprising validating said signature (303) using a public key in said electronic device (100) ; and
acting (210) upon said payload (302) at said electronic device (100) if said second verification (207) is successful (208); **characterized in that** said first verification (202, 401) comprises checking the correctness of the internal structure of said software module (301) .

2. The method of claim 1, wherein said electronic device (100) comprises a smart card reader.

3. The method of claim 1, wherein said internal structure is checked against a set of standardized syntax rules.

4. The method of claim 3, wherein said syntax rules are standardized in an ASN.1 definition, a PKCS#7 specification, and/or an XML Signature recommendation.

5. The method of any of the preceding claims, wherein said internal structure is checked against a set of encoding rules.

6. The method of any of the preceding claims, further comprising repackaging said software module (301) at said host (101).

7. The method of any of the preceding claims, wherein said first verification (202, 401) comprises checking the validity of said signature (303).

8. The method of claim 7, further comprising obtaining at said host (101) an indication from said electronic device (100) of a public key preloaded in said electronic device (100)

9. The method of any of the preceding claims, wherein said software module (301) further comprises a set of certificates (304) pertaining to a key used to generate said signature (303), and wherein said second verification (207) further comprises validating said set of certificates (304)

10. The method of claim 9, wherein said first verification (202, 401) comprises checking the validity of at least one of said set of certificates (304).

11. The method of claims 9 or 10, wherein said second verification (207) comprises establishing whether a first one of said set of certificates (304) is signed with a private key whose corresponding public key is pre-installed in said electronic device (100).

12. The method of any of the preceding claims, further comprising displaying (407) a confirmation message and capturing a user approval indication at said electronic device (100) prior to said acting (210) upon said payload (302).

13. The method of any of the preceding claims, wherein said payload (302) comprises program code and said acting (210) upon said payload (302) comprises installing or activating said program code.

14. The method of any of the preceding claims, wherein said payload (302) comprises a command and said acting (210) upon said payload (302) comprises executing said command.

15. The method of any of the preceding claims, wherein said payload (302) comprises a public key, and said acting (210) upon said payload (302) comprises storing said public key in said electronic device (100).

## Patentansprüche

1. Verfahren zum Aktualisieren von Software auf einer elektronischen Einrichtung, umfassend:
Gewinnen (201) eines Softwaremoduls (301) bei einem Host (101), wobei das Softwaremodul (301) mindestens Nutzdaten (302) und eine Signatur (303) aufweist, die zu den Nutzdaten (302) gehört;
Durchführen einer ersten Verifizierung (202, 401) des Softwaremoduls (301) bei dem Host (101);
Senden (206, 405) des Softwaremoduls (301) von dem Host (101) an die elektronische Vorrichtung (100), falls die erste Verifizierung (202, 401) erfolgreich ist (203);
Durchführen einer zweiten Verifizierung (207) des Softwaremoduls (301) bei der elektronischen Vorrichtung (100), wobei die zweite Verifizierung (207) ein Validieren der Signatur (303) unter Verwendung eines öffentlichen Schlüssels in der elektronischen Vorrichtung (100) umfasst; und
Einwirken (210) auf die Nutzdaten (302) bei der elektronischen Vorrichtung (100), falls die zweite Verifizierung (207) erfolgreich ist (208);
**dadurch gekennzeichnet, dass**
die erste Verifizierung (202, 401) ein Überprüfen der Richtigkeit der inneren Struktur des Softwaremoduls (301) umfasst.

2. Verfahren nach Anspruch 1, wobei die elektronische Vorrichtung (100) einen Chipkartenleser aufweist.

3. Verfahren nach Anspruch 1, wobei die innere Struktur gegen eine Reihe von standardisierten Syntaxregeln überprüft wird.

4. Verfahren nach Anspruch 3, wobei die Syntaxregeln in einer ASN.1 Definition, in einer PKCS#7 Spezifikation und/oder in einer XML Signaturempfehlung standardisiert sind.

5. Verfahren nach einem der vorhergehenden Ansprüche, wobei die innere Struktur gegen einen Satz von Codierungsregeln überprüft wird.

6. Verfahren nach einem der vorhergehenden Ansprüche, ferner umfassend: Neuverpacken des Softwaremoduls (301) bei dem Host (101).

7. Verfahren nach einem der vorhergehenden Ansprüche, wobei die erste Verifizierung (202, 401) ein Überprüfen der Gültigkeit der Signatur (303) umfasst.

8. Verfahren nach Anspruch 7, ferner umfassend: Gewinnen einer Anzeige eines in der elektronischen Vorrichtung (100) vorgeladenen öffentlichen Schlüssels von der elektronischen Vorrichtung (100) bei dem Host (101).

9. Verfahren nach einem der vorhergehenden Ansprüche, wobei das Softwaremodul (301) ferner einen Satz von Zertifikaten (304) aufweist, die zu einem Schlüssel gehören, der genutzt wird, um die Signatur (303) zu erzeugen, und wobei die zweite Verifizierung (207) ferner ein Validieren des Satzes von Zertifikaten (304) umfasst.

10. Verfahren nach Anspruch 9, wobei die erste Verifizierung (202, 401) ein Überprüfen der Gültigkeit wenigstens eines Zertifikats aus dem Satz von Zertifikaten (304) umfasst.

11. Verfahren nach den Ansprüchen 9 oder 10, wobei die zweite Verifizierung (207) umfasst: Feststellen, ob ein erstes Zertifikat aus dem Satz von Zertifikaten (304) mit einem privaten Schlüssel gekennzeichnet ist, dessen entsprechender öffentlicher Schlüssel in der elektronischen Vorrichtung (100) vorinstalliert ist.

12. Verfahren nach einem der vorhergehenden Ansprüche, ferner umfassend: Anzeigen (407) einer Bestätigungsmeldung auf einem Bildschirm und Erfassen einer Benutzerzustimmungsangabe bei der elektronischen Vorrichtung (100) vor dem Einwirken (210) auf die Nutzdaten (302) .

13. Verfahren nach einem der vorhergehenden Ansprüche, wobei die Nutzdaten (302) einen Programmcode aufweisen, und das Einwirken (210) auf die Nutzdaten (302) ein Installieren oder Aktivieren des Programmcodes umfasst.

14. Verfahren nach einem der vorhergehenden Ansprüche, wobei die Nutzdaten (302) einen Befehl aufweisen, und das Einwirken (210) auf die Nutzdaten (302) ein Ausführen des Befehls umfasst.

15. Verfahren nach einem der vorhergehenden Ansprüche, wobei die Nutzdaten (302) einen öffentlichen Schlüssel aufweist, und das Einwirken (210) auf die Nutzdaten (302) ein Speichern des öffentlichen Schlüssels in der elektronischen Vorrichtung (100) umfasst.

## Revendications

1. Procédé pour mettre à jour le logiciel sur un dispositif électronique, comprenant :
l'obtention (201) d'un module de logiciel (301) au niveau d'un hôte (101), ledit module de logiciel (301) comprenant au moins une charge utile (302) et une signature (303) se rapportant à ladite charge utile (302) ;
l'exécution au niveau dudit hôte (101) d'une première vérification (202, 401) dudit module de logiciel (301) ;
la transmission (206, 405) dudit module de logiciel (301) à partir dudit hôte (101) audit dispositif électronique (100) si ladite première vérification (202, 401) est couronnée de succès (203) ;
l'exécution au niveau dudit dispositif électronique (100) d'une seconde vérification (207) dudit module de logiciel (301), ladite seconde vérification (207) comprenant la validation de ladite signature (303) en utilisant une clé publique dans ledit dispositif électronique (100) ; et
l'action (210) sur ladite charge utile (302) au niveau dudit dispositif électronique (100) si ladite seconde vérification (207) est couronnée de succès (208) ; **caractérisé en ce que**
ladite première vérification (202, 401) comprend le contrôle de la justesse de la structure interne dudit module de logiciel (301).

2. Procédé selon la revendication 1, dans lequel ledit dispositif électronique (100) comprend un lecteur de carte à puce.

3. Procédé selon la revendication 1, dans lequel ladite structure interne est contrôlée par rapport à un ensemble de règles de syntaxe standardisées.

4. Procédé selon la revendication 3, dans lequel lesdites règles de syntaxe sont standardisées dans une définition ASN.1, une spécification PKCS#7, et/ou une recommandation de Signature XML.

5. Procédé selon n'importe laquelle des revendications précédentes, dans lequel ladite structure interne est contrôlée par rapport à un ensemble de règles de codage.

6. Procédé selon l'une quelconque des revendications précédentes, comprenant en outre le remballage dudit module de logiciel (301) au niveau dudit hôte (101) .

7. Procédé selon l'une quelconque des revendications précédentes, dans lequel ladite première vérification (202, 401) comprend le contrôle de la validité de ladite signature (303).

8. Procédé selon la revendication 7, comprenant en outre l'obtention au niveau dudit hôte (101) d'une indication en provenance dudit dispositif électronique (100) d'une clé publique préchargée dans ledit dispositif électronique (100).

9. Procédé selon l'une quelconque des revendications précédentes, dans lequel ledit module de logiciel (301) comprend en outre un ensemble de certificats (304) se rapportant à une clé utilisée pour produire ladite signature (303), et dans lequel ladite seconde vérification (207) comprend en outre la validation dudit ensemble de certificats (304).

10. Procédé selon la revendication 9, dans lequel ladite première vérification (202, 401) comprend le contrôle de la validité d'au moins un dudit ensemble de certificats (304).

11. Procédé selon les revendications 9 ou 10, dans lequel ladite seconde vérification (207) comprend l'établissement si un premier dudit ensemble de certificats (304) est signé avec une clé privée dont la clé publique correspondante est préinstallée dans ledit dispositif électronique (100).

12. Procédé selon l'une quelconque des revendications précédentes, comprenant en outre l'affichage (407) d'un message de confirmation et la capture d'une indication d'agrément d'utilisateur au niveau dudit dispositif électronique (100) avant ladite action (210) sur ladite charge utile (302).

13. Procédé selon l'une quelconque des revendications précédentes, dans lequel ladite charge utile (302) comprend un code de programme et ladite action (210) sur ladite charge utile (302) comprend l'installation ou l'activation dudit code de programme.

14. Procédé selon l'une quelconque des revendications précédentes, dans lequel ladite charge utile (302) comprend un ordre et ladite action (210) sur ladite charge utile (302) comprend l'exécution dudit ordre.

15. Procédé selon l'une quelconque des revendications précédentes, dans lequel ladite charge utile (302) comprend une clé publique, et ladite action (210) sur ladite charge utile (302) comprend le stockage de ladite clé publique dans ledit dispositif électronique (100).
